# EUROPÄISCHE PATENTSCHRIFT

(11) **EP 2 087 564 B1**
(45) Veröffentlichungstag und Bekanntmachung des Hinweises auf die Patenterteilung: **09.02.2011**
(21) Anmeldenummer: 07847915.1
(22) Anmeldetag: 06.12.2007
(51) Int. Cl.: H02B 1/052

(54) **BEFESTIGUNGSVORRICHTUNG VON ELEKTRONIKMODULEN AUF TRAGSCHIENE**
FASTENING DEVICE FOR ELECTRONIC MODULES ON A MOUNTING RAIL
DISPOSITIF DE FIXATION DE MODULES ÉLECTRONIQUES SUR UN RAIL PORTEUR

(30) Priorität: 07.12.2006 DE 102006057766
(43) Veröffentlichungstag der Anmeldung: 12.08.2009
(73) Patentinhaber: SIEMENS AKTIENGESELLSCHAFT, 80333 München (DE)
(72) Erfinder: HECHT, Franz, 91085 Weisendorf (DE); KRAUSS, Martin, 90461 Nürnberg (DE); MÜLLER, Markus, 90443 Nürnberg (DE); PASCHKA, Raphael, 90482 Nürnberg (DE)
(86) Internationale Anmeldenummer: PCT/EP2007/063440
(87) Internationale Veröffentlichungsnummer: WO 2008/068312

(56) Entgegenhaltungen:
- EP-A- 0 373 627
- DE-A1- 3 513 762

## Beschreibung

Befestigungsvorrichtung von Elektronikmodulen auf Tragschiene

Die Erfindung betrifft eine Vorrichtung zur Befestigung eines Elektronikmoduls auf einer Tragschiene sowie ein mit einer derartigen Vorrichtung auf einer Tragschiene befestigbares Elektronikmodul.

Eine derartige Vorrichtung dient dazu, ein Elektronikmodul, insbesondere ein elektrisches Installationsgerät, auf einer Tragschiene zu befestigen. Die Tragschiene ist im Allgemeinen als eine Hutprofiltragschiene ausgebildet, auf der das Elektronikmodul durch Einhaken einer Nase der Befestigungsvorrichtung hinter eine Kante der Tragschiene und anschließendem Einrasten der anderen Nase hinter der anderen Kante der Tragschiene befestigt wird.

Die bekannten, bis heute üblichen Vorrichtungen weisen zwei Nasen, von denen mindestens eine beweglich ist, zur Befestigung auf, mittels derer ein Elektronikmodul auf eine Tragschiene eingerastet wird. Je nach Art der Vorrichtung wird das Elektronikmodul an der oberen oder der unteren Kante der Tragschiene angesetzt und durch eine Schwenkbewegung an der anderen Kante eingerastet. Einige Befestigungsvorrichtungen, die gewöhnlich zwei bewegliche Nasen aufweisen, ermöglichen ein Ansetzen des Elektronikmoduls von beiden Seiten auf die Tragschiene.

Aus DE 298 05 494 U1 ist eine Schnellbefestigungseinrichtung für ein elektrisches Installationsgerät zum Aufschnappen auf eine Hutprofilschiene bekannt, die ein Aufrasten auf die Hutprofiltragschiene entweder um die eine oder um die andere Nase gestattet. Dabei weist der Boden des Installationsgerätes eine Ausnehmung auf, deren eine Wandung eine feststehende Nase und deren andere Wandung eine federnd in die Ausnehmung gedrückte bewegliche Nase aufweisen.

Aus der DE 42 10 556 C2 ist eine Vorrichtung zur Befestigung eines Elektronikmoduls auf einer Tragschiene bekannt. Das Elektronikmodul hat eine bewegliche Nase, die im montierten Zustand das Profil der Tragschiene umgreift.

Der Erfindung liegt die Aufgabe zugrunde, eine Vorrichtung zur Befestigung eines Elektronikmoduls bzw. ein Elektronikmodul anzugeben, die bzw. das die Befestigung des Elektronikmoduls auf einer Tragschiene einfach und kostengünstig ermöglicht.

Diese Aufgabe wird gelöst durch eine Vorrichtung zur Befestigung eines Elektronikmoduls auf einer Tragschiene,
- wobei die Vorrichtung eine bewegliche Nase aufweist, die zusammen mit einer an einer Rückseite eines Gehäuses des Elektronikmoduls vorgesehenen festen Nase im montierten Zustand das Profil der Tragschiene umgreift,
- wobei die bewegliche Nase als Klemmprofil eines Schiebers ausgebildet ist,
- wobei die Vorrichtung mittels Einstecken von mechanischen Verankerungen in dafür vorgesehene Ausnehmungen des Gehäuses an der Rückseite des Elektronikmoduls montierbar ist,
- wobei die Vorrichtung einen Federmechanismus aufweist, der zur Abstützung am Gehäuse des Elektronikmoduls vorgesehen ist und durch den der Schieber mit einer Kraft beaufschlagt ist, aus der die Klemmkraft der Vorrichtung auf der Tragschiene resultiert, und
- wobei ein der beweglichen Nase gegenüberliegendes Ende des Schiebers zur manuellen Verschiebung der beweglichen Nase über das Gehäuse des Elektronikmoduls hinausragt.

Die Aufgabe wird weiter gelöst durch ein Elektronikmodul mit den in Anspruch 6 angegebenen Merkmalen.

Durch das erfindungsgemäße Einstecken der mechanischen Verankerungen in dafür vorgesehene Ausnehmungen des Gehäuses ist die Vorrichtung durch einen einfachen Montageschritt in das Gehäuse des Elektronikmoduls einsetzbar. Die Vorspannung erhält der Schiebemechanismus durch den in die Vorrichtung integrierten Federmechanismus. Dieser kommt bei der Montage in einer Ausstanzung des Gehäuses in Eingriff und erzeugt die zur Befestigung auf der Tragschiene notwendige Vorspannung. Aufgrund der Integration des Federmechanismus in die Vorrichtung entfällt eine aufwendige Federmontage. Diese einfache und kostengünstige Lösung eignet sich ab Modulbreiten ab 30 mm; bei entsprechend breiteren und schwereren Komponenten ist es denkbar, mehrere dieser Vorrichtungen einzusetzen.

In einer vorteilhaften Form der Ausgestaltung ist die bewegliche Nase derart ausgeführt, dass bei Befestigung des Elektronikmoduls auf der Tragschiene der Schieber gegen die Kraft des Federmechanismus bewegbar ist. Hierdurch kann das Elektronikmodul nach Einhängen der festen Nase auf die Tragschiene einfach mittels einer Schwenkbewegung auf die Tragschiene montiert werden, da der Schieber durch die Ausgestaltung der beweglichen Nase bei der Schwenkbewegung nach unten gedrückt wird und hinter der Tragschiene einrastet.

In einer weiteren vorteilhaften Ausführungsform ist eine Verrastungsnase zur Fixierung der Vorrichtung im Gehäuse im nicht-montierten Zustand vorgesehen, wodurch ein sicherer Verbleib der Vorrichtung am Gehäuse gewährleistet ist.

In einer weiteren vorteilhaften Ausführungsform weist das der beweglichen Nase gegenüberliegende Ende des Schiebers eine längliche Öffnung auf. Hierdurch kann die Demontage des Elektronikmoduls von der Tragschiene durch Drehen eines Schraubenziehers in der Öffnung des Schiebers und einer anschließenden Schwenkbewegung des Gehäuses von der Tragschiene weg erfolgen.

In einer weiteren vorteilhaften Ausführungsform ist die Vorrichtung aus Kunststoff. Hierdurch ist diese Ausführung besonders kostengünstig realisierbar.

In einer weiteren vorteilhaften Ausführungsform weist die Vorrichtung eine metallisierte Oberfläche auf. Speziell bei einem Blechgehäuse kann durch diese Ausführung ein EMVsicherer Aufbau gewährleistet werden.

Im Folgenden wird die Erfindung anhand der in den Figuren dargestellten Ausführungsbeispiele näher beschrieben und erläutert. Es zeigen:
- FIG 1: eine erfindungsgemäße Vorrichtung vor der Montage am Gehäuse des Elektronikmoduls,
- FIG 2: die Vorrichtung aus FIG 1 bei der Montage,
- FIG 3: die Vorrichtung aus FIG 1 und 2 nach der Montage,
- FIG 4: die Montage des Gehäuses auf einer Tragschiene mittels der angebrachten Vorrichtung,
- FIG 5: das Gehäuse aus FIG 4 im auf der Tragschiene montierten Zustand,
- FIG 6: eine Doppelansicht des montierten Gehäuses vor der De- montage von der Tragschiene,
- FIG 7: die Doppelansicht aus FIG 6 bei der Demontage und
- FIG 8: eine Ansicht eines mittels der Vorrichtung auf der Tragschiene eingehängten Elektronikmoduls.

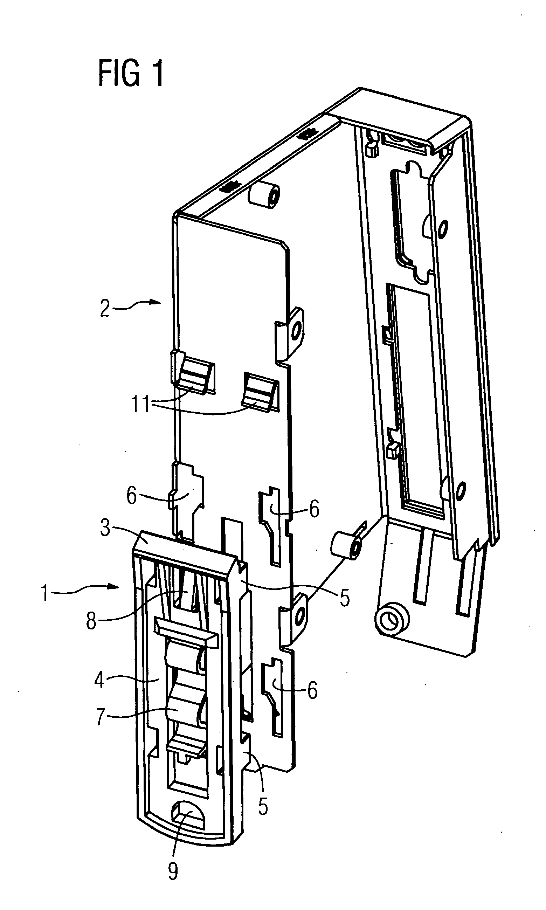

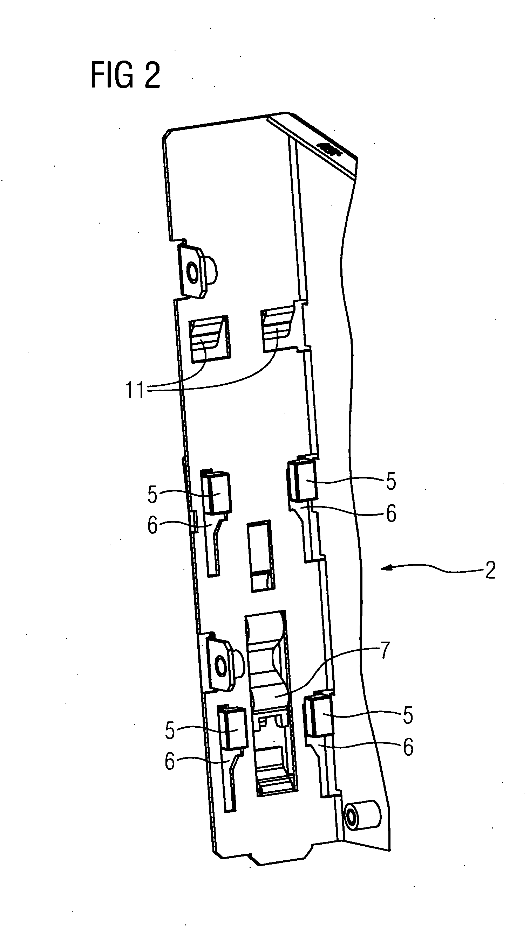

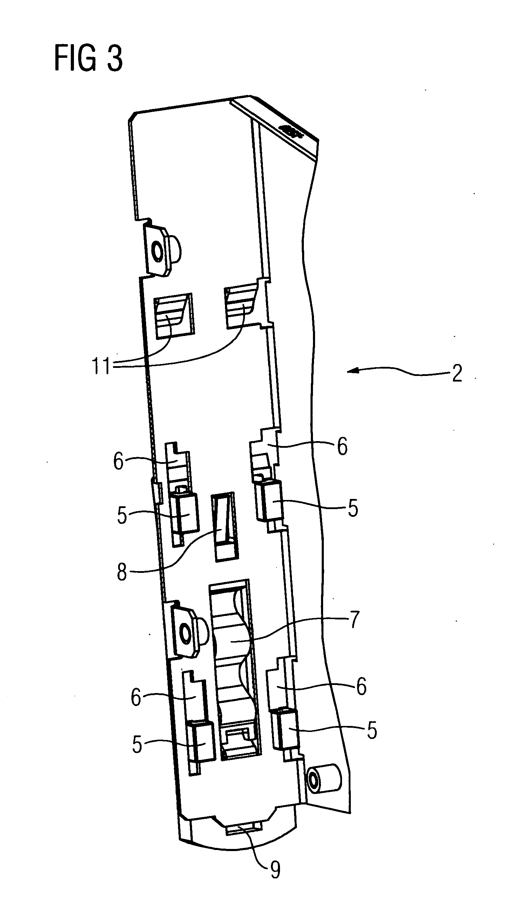

FIG 1 zeigt eine vorteilhafte Ausführungsform der erfindungsgemäßen Vorrichtung 1 sowie einen Ausschnitt eines Gehäuses 2 eines an einer Tragschiene 10 zu befestigenden Elektronikmoduls 12. Die Vorrichtung 1 weist eine als Klemmprofil eines Schiebers 4 ausgebildete bewegliche Nase 3 auf, die zusammen mit einer an der Rückseite des Gehäuses 2 vorgesehenen festen Nase 11 im montierten Zustand das Profil der Tragschiene 10 umgreift. Weiterhin weist die Vorrichtung einen Federmechanismus 7 zur Erzeugung der nötigen Klemmkraft auf sowie eine Verrastungsnase 8 und eine längliche Öffnung 9 im Schieber 4, deren Funktion in den nächsten Abbildungen erläutert wird.
Zur Montage am Gehäuse 2 wird die Vorrichtung 1 mit den mechanischen Verankerungen 5 durch die dafür vorgesehenen Ausnehmungen 6 im Gehäuse gesteckt und anschließend nach unten verschoben, wie in den Figuren 2 und 3 gezeigt ist.

FIG 2 zeigt in einer rückwärtigen Ansicht die Vorrichtung 1 aus FIG 1, die mit den mechanischen Verankerungen 5 in die Ausnehmungen 6 des Gehäuses 2 gesteckt ist. Der Federmechanismus 7 kommt mit einer Ausstanzung des Gehäuses 2 in Eingriff und erzeugt durch das Verschieben der Vorrichtung 1, s. FIG 3, die zur Befestigung auf der Tragschiene 10 notwendige Vorspannung..

FIG 3 zeigt in der gleichen Ansicht wie in FIG 2 die Vorrichtung 1 im am Gehäuse 2 montierten Zustand. In diesem bleibt die Vorrichtung 1 durch die Verrastungsnase 8 sowie die mechanischen Verankerungen 5 am Gehäuse 2 fixiert, und die Feder 7 erzeugt die notwendige Vorspannung.

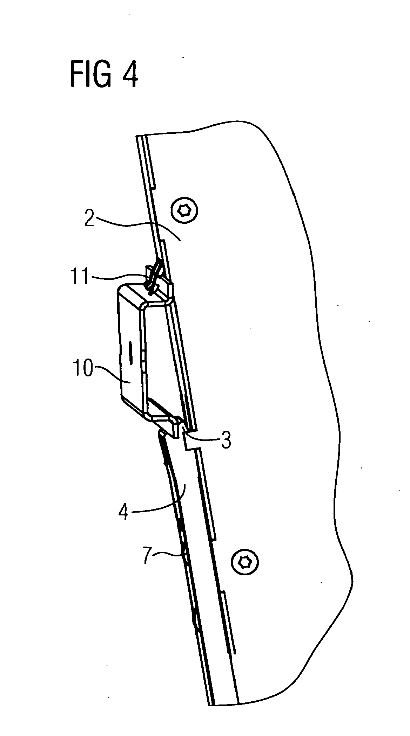

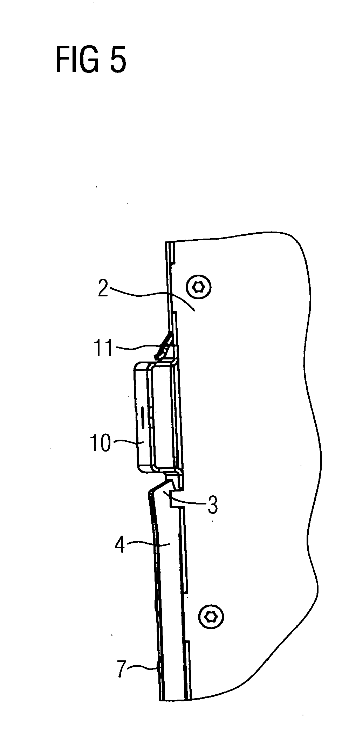

FIG 4 zeigt die Montage des Gehäuses 2 auf einer Tragschiene 10 mittels der Vorrichtung 1, von der hier nur der obere Teil mit der beweglichen Nase 3 abgebildet ist. Das Gehäuse wird nun über eine als zwei Laschen ausgebildete feste Nase 11 auf der als Hutschiene ausgebildeten Tragschiene 10 eingehängt und mittels einer Schwenkbewegung auf die Hutschiene 10 montiert. Dabei wird der Schieber 4 über seine obere Schräge, die die bewegliche Nase 3 bildet, nach unten gedrückt und rastet dann durch die Federkraft des Federmechanismus 7 hinter der Hutschiene 10 ein, s. FIG 5.

FIG 5 zeigt das Gehäuse 2 aus FIG 4 im auf der Tragschiene 10 montierten Zustand. Durch die durch den Federmechanismus 7 ausgeübte Kraft ist der Schieber 4 hinter der Hutschiene 10 eingerastet und die bewegliche Nase 3 umgreift zusammen mit der festen Nase 11 des Gehäuses 2 das Profil der Tragschiene 10.

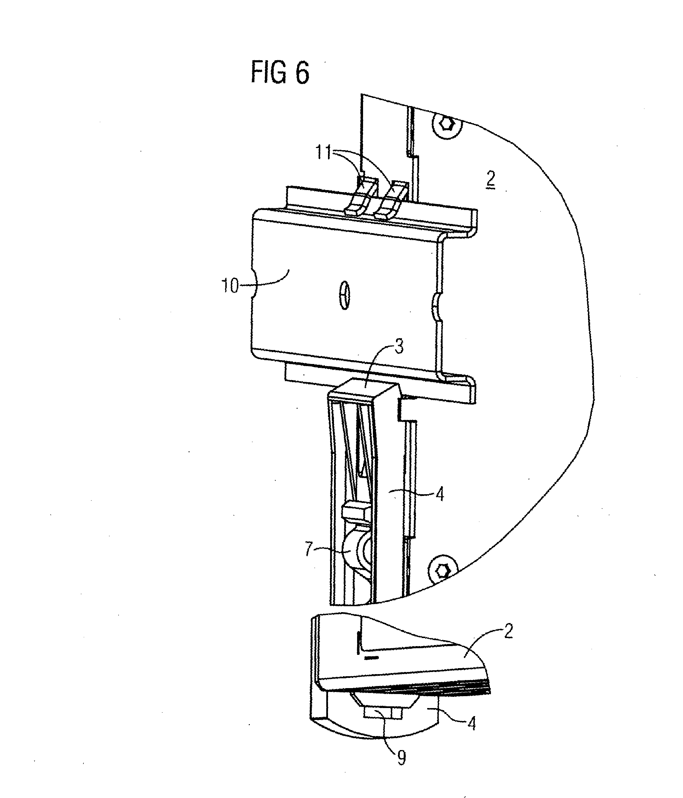

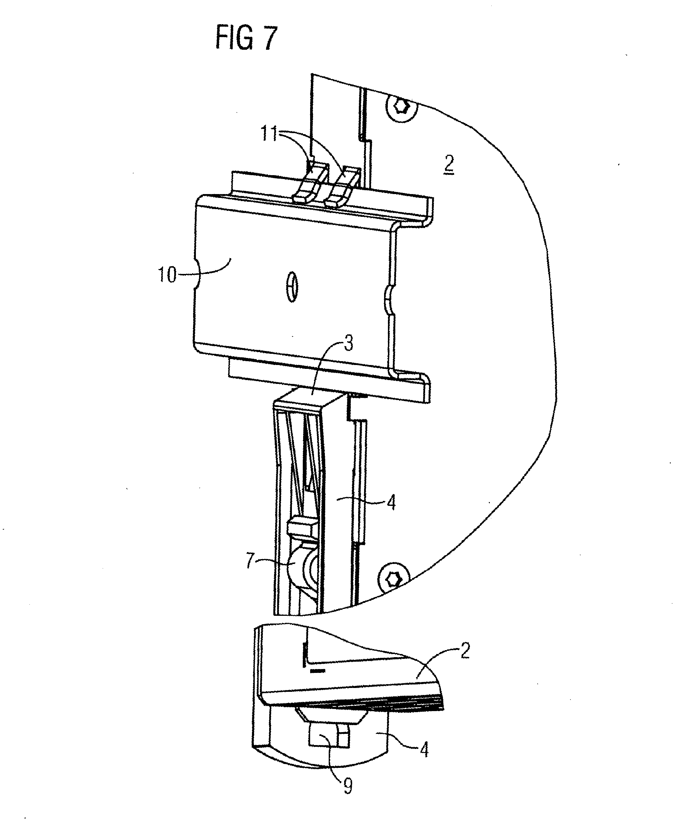

FIG 6 zeigt eine Doppelansicht des montierten Gehäuses 2 vor der Demontage von der Tragschiene 10. In der oberen Hälfte ist der Schieber 4 im durch die Feder 7 arretierten Zustand dargestellt, in dem die bewegliche Nase 3 zusammen mit der festen Nase 11 das Profil der Hutschiene 10 umgreifen. In der unteren Hälfte sieht man das der beweglichen Nase 3 gegenüberliegende Ende des Schiebers 4 mit einer länglichen Öffnung 9 über das Gehäuse 2 hinausragen. Dieses Ende dient der manuellen Verschiebung des Schiebers 4, so dass das Gehäuse 2 wieder durch eine Schwenkbewegung von der Hutschiene 10 abgezogen werden kann, s. FIG 7. Durch die längliche Öffnung 9 kann dieses Lösen der Verbindung auch leicht durch Drehen eines Schraubenziehers erreicht werden.

FIG 7 zeigt die Doppelansicht aus FIG 6 bei der Demontage. Hier ist der Schieber 4 nach unten gezogen bzw. mit einem Schraubenzieher gedreht und gibt somit die Hutschiene 10 wieder frei, so dass das Gehäuse 2 durch eine Schwenkbewegung abgezogen werden kann.

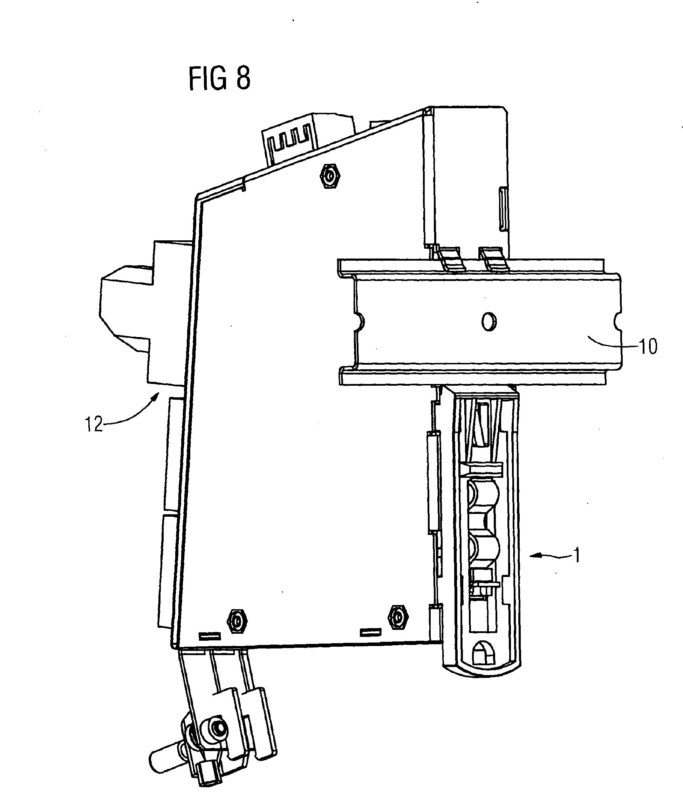

FIG 8 zeigt eine Ansicht eines mittels der Vorrichtung 1 auf der Tragschiene 10 eingehängten Elektronikmoduls 12. Die Montage eines Metall- oder Kunststoffgehäuses 2 auf eine Hutschiene 10 kann mit dieser preiswerten, vorteilhafterweise aus Kunststoff gefertigten, Vorrichtung 1 einfach und sicher realisiert werden. Die Lösung eignet sich ab Modulbreiten von 30 mm. Bei entsprechend breiteren und schwereren Komponenten 12 ist es denkbar, mehrere dieser Montageelemente 1 einzusetzen. Aufgrund der Integration der Feder 7 in den Kunststoff entfällt eine aufwendige Federmontage. Speziell bei einem Blechgehäuse 2 kann durch diese Montageart in Verbindung mit einer metallisierten Oberfläche der Vorrichtung 1 ein EMVsicherer Aufbau gewährleistet werden.

Zusammenfassend betrifft die Erfindung eine Vorrichtung zur Befestigung eines Elektronikmoduls auf einer Tragschiene sowie ein mit einer derartigen Vorrichtung auf einer Tragschiene befestigbares Elektronikmodul. Der Erfindung liegt die Aufgabe zugrunde, eine Vorrichtung zur Befestigung eines Elektronikmoduls bzw. ein Elektronikmodul anzugeben, die bzw. das die Befestigung des Elektronikmoduls auf einer Tragschiene einfach und kostengünstig ermöglicht. Diese Aufgabe wird gelöst durch eine Vorrichtung zur Befestigung eines Elektronikmoduls auf einer Tragschiene, wobei die Vorrichtung eine bewegliche Nase aufweist, die zusammen mit einer an einer Rückseite eines Gehäuses des Elektronikmoduls vorgesehenen festen Nase im montierten Zustand das Profil der Tragschiene umgreift, wobei die bewegliche Nase als Klemmprofil eines Schiebers ausgebildet ist, wobei die Vorrichtung mittels Einstecken von mechanischen Verankerungen in dafür vorgesehene Ausnehmungen des Gehäuses an der Rückseite des Elektronikmoduls montierbar ist, wobei die Vorrichtung einen Federmechanismus aufweist, der zur Abstützung am Gehäuse des Elektronikmoduls vorgesehen ist und durch den der Schieber mit einer Kraft beaufschlagt ist, aus der die Klemmkraft der Vorrichtung auf der Tragschiene resultiert, und wobei ein der beweglichen Nase gegenüberliegendes Ende des Schiebers zur manuellen Verschiebung der beweglichen Nase über das Gehäuse des Elektronikmoduls hinausragt.

## Patentansprüche

1. Vorrichtung (1) zur Befestigung eines Elektronikmoduls (12) auf einer Tragschiene (10),
- wobei die Vorrichtung (1) eine bewegliche Nase (3) aufweist, die zusammen mit einer an einer Rückseite eines Gehäuses (2) des Elektronikmoduls (12) vorgesehenen festen Nase (11) im montierten Zustand das Profil der Tragschiene (10) umgreift,
- wobei die bewegliche Nase (3) als Klemmprofil eines Schiebers (4) ausgebildet ist,
- wobei die Vorrichtung (1) mittels Einstecken von mechanischen Verankerungen (5) in dafür vorgesehene Ausnehmungen (6) des Gehäuses (2) an der Rückseite des Elektronikmoduls (12) montierbar ist,
- wobei die Vorrichtung (1) einen Federmechanismus (7) aüfweist, der zur Abstützung am Gehäuse (2) des Elektronikmoduls (12) vorgesehen ist und durch den der Schieber (4) mit einer Kraft beaufschlagt ist, aus der die Klemmkraft der Vorrichtung (1) auf der Tragschiene (10) resultiert, und
- wobei ein der beweglichen Nase (3) gegenüberliegendes Ende des Schiebers (4) zur manuellen Verschiebung der beweglichen Nase (3) über das Gehäuse (2) des Elektronikmoduls (12) hinausragt, und
- wobei das Ende des Schiebers (4) eine längliche Öffnung (9) aufweist, die so ausgestaltet ist, dass ein Lösen des Schiebers (4) aus einem arretierten zustand mittels Drehen eines in die Öffnung (9) eingeführten Schraubenziehers ermöglicht ist.

2. Vorrichtung nach Anspruch 1, wobei die bewegliche Nase (3) derart ausgeführt ist, dass bei Befestigung des Elektronikmoduls (12) auf der Tragschiene (10) der Schieber (4) gegen die Kraft des Federmechanismus (7) bewegbar ist.

3. Vorrichtung nach Anspruch 1 oder 2, wobei eine Verrastungsnase (8) zur Fixierung der Vorrichtung (1) im Gehäuse (2) im nicht-montierten Zustand vorgesehen ist.

4. Vorrichtung nach einem der vorhergehenden Ansprüche, wobei die Vorrichtung (1) aus Kunststoff ist.

5. Vorrichtung nach Anspruch 4, wobei die Vorrichtung (1) eine metallisierte Oberfläche aufweist.

6. Elektronikmodul (12) zur Befestigung auf einer Tragschiene (10) mittels einer Vorrichtung (1) nach einem der Ansprüche 1 bis 5.

## Claims

1. Device (1) for fastening an electronic module (12) on a support rail (10),
- wherein the device (1) has a displaceable nose (3), which together with a fixed nose (11) provided on a rear face of a housing (2) of the electronic module (12) encompasses the profile of the support rail (10) in the mounted state,
- wherein the displaceable nose (3) is configured as a clamping profile of a slide (4),
- wherein the device (1) can be mounted on the rear face of the electronic module (12) by inserting mechanical anchors (5) in recesses (6) provided for this purpose on the housing (2),
- wherein the device (1) has a spring mechanism (7), which is provided to be braced against the housing (2) of the electronic module (12) and which causes the slide (4) to be subjected to a force, resulting in the clamping force of the device (1) on the support rail (10), and
- wherein an end of the slide (4) opposite the displaceable nose (3) projects beyond the housing (2) of the electronic module (12) for manual displacement of the displaceable nose (3) .
- wherein the end of the slide (4) has an elongated opening (9), which is configured such that a release of the slide (4) from a stopped state is enabled by means of rotating a screw driver inserted into the opening (9).

2. Device according to claim 1, wherein the displaceable nose (3) is embodied in such a manner that when the electronic module (12) is fastened on the support rail (10) the slide (4) can be displaced counter to the force of the spring mechanism (7).

3. Device according to claim 1 or 2, wherein a latching nose (8) is provided to fix the device (1) in the housing (2) in the non-mounted state.

4. Device according to one of the preceding claims, wherein the device (1) is made of plastic.

5. Device according to claim 4, wherein the device (1) has a metal-coated surface.

6. Electronic module (12) for fastening on a support rail (10) by means of a device (1) according to one of claims 1 to 5.

## Revendications

1. Dispositif ( 1 ) de fixation d'un module ( 12 ) électronique sur un rail ( 10 ) porteur,
- dans lequel le dispositif ( 1 ) a un bec ( 3 ) mobile, qui ensemble avec un bec ( 11 ) fixe, prévu sur une face arrière d'un boîtier ( 2 ) du module ( 12 ) électronique, enserre à l'état monté le profil du rail ( 10 ) porteur,
- dans lequel le bec ( 3 ) mobile est constitué sous la forme d'un profil de serrage d'un coulisseau ( 4 ),
- dans lequel le dispositif ( 1 ) peut être monté sur la face arrière du module ( 12 ) électronique, en enfonçant des ancrages ( 5 ) mécaniques dans des évidements ( 6 ) prévus à cet effet du boîtier ( 2 ),
- dans lequel le dispositif ( 1 ) a un mécanisme ( 7 ) à ressort, qui est prévu pour l'appui du module ( 12 ) électronique sur le boîtier ( 2 ) et par lequel le coulisseau ( 4 ) peut être soumis à une force, dont résulte la force de serrage du dispositif ( 1 ) sur le rail ( 10 ) porteur, et
- dans lequel une extrémité du coulisseau ( 4 ) opposée au bec ( 3 ) mobile dépasse, pour déplacer manuellement le bec ( 3 ) mobile, du boîtier ( 2 ) du module ( 12 ) électronique, et
- dans lequel l'extrémité du coulisseau ( 4 ) a une boutonnière ( 9 ), qui est conformée de manière à rendre possible de faire sortir le coulisseau ( 4 ) d'un état bloqué, en faisant tourner un tournevis inséré dans la boutonnière ( 9 ).

2. Dispositif suivant la revendication 1, dans lequel le bec ( 3 ) mobile est tel que, lors de la fixation du module ( 12 ) électronique sur le rail ( 10 ) porteur, le coulisseau ( 4 ) peut être déplacé à l'encontre de la force du mécanisme ( 7 ) à ressort.

3. Dispositif suivant la revendication 1 ou 2, dans lequel il est prévu un bec ( 8 ) d'encliquetage, pour immobiliser le dispositif ( 1 ) dans le boîtier ( 2 ) à l'état non monté.

4. Dispositif suivant l'une des revendications précédentes, dans lequel le dispositif ( 1 ) est en matière plastique.

5. Dispositif suivant la revendication 4, dans lequel le dispositif ( 1 ) a une surface métallisée.

6. Module ( 12 ) électronique à fixer sur un rail ( 10 ) porteur au moyen d'un dispositif ( 1 ) suivant l'une des revendications 1 à 5.
